# EUROPEAN PATENT APPLICATION

(11) **EP 4 431 374 A1**
(43) Date of publication of application: **18.09.2024**
(21) Application number: 22910508.5
(22) Date of filing: 29.09.2022
(51) Int. Cl.: B62D 35/00, B62D 25/06, B62D 33/06

(54) **HIGH ROOF CAB FOR TRUCK**

(30) Priority: 23.12.2021 JP 2021209811
(71) Applicant: Daimler Truck AG, 70771 Leinfelden-Echterdingen (DE)
(72) Inventor: IGUCHI, Taishi, Kawasaki-shi, Kanagawa 211-8522 (JP); NAKAZATO, Jun, Kawasaki-shi, Kanagawa 211-8522 (JP)
(74) Representative: Hofstetter, Schurack & Partner
(86) International application number: PCT/JP2022/036427
(87) International publication number: WO 2023/119782

(57) **Abstract**

A high roof cab for a truck in which a roof panel (22P) made of a metal plate is mounted to expand a vehicle interior to an upper side of a cab body (2A) having an opened ceiling and an vehicle interior of a cab is integrally formed by the cab body (2A) and a roof part (22) including the roof panel (22P), is characterized in that the roof part includes bafflers (4) mounted on both sides of the roof panel (22P), and each of the bafflers (4) includes an inclined face (41) which inclines so as to gradually widen a width of the roof part (22) outward in a vehicle width direction from a vehicle front side toward a vehicle rear side.

## Description

### [Technical Field]

The present invention is related to a high roof cab for a truck, suitable for a large-sized truck.

### [Background Art]

Large-sized trucks or the likes are often used in long distance travel, and since drivers thereof drive for long periods of time and rest in vehicle interiors for temporary sleeps, etc., comfortableness is demanded. With such demands in a background, to expand vehicle interior space of cabs, there exist cabs of a high roof type. In the cabs of a high roof type, roof panels for high roofs, which are manufactured by pressing metal plates, are mounted on cab bodies without ceilings by spot welding or the like, and thereby, the vehicle interior space is extended to an upper side of the cab bodies (see Patent Document 1).

### [Citation List]

### [Patent Documents]

[Patent Document 1] Japanese Laid-Open Patent Publication No. 2020-152168

### [Summary of Invention]

### [Technical Problem]

Since trucks receive oncoming wind on front faces of the cabs, air resistance becomes large. One of factors of the air resistance is a mounted object behind the cab, and in a case of, for example, the mounted object of a box type (cargo box) in a van truck, since the front face of the cargo box confronts directly against the traveling direction of the vehicle, a front face receives strong oncoming wind, causing large air resistance. In the cargo box, an upper portion and left and right side portions of the front face protrude upward and sideward farther than a rear portion of the cab, so that the protruding portions receive large traveling resistance during traveling.

Since large air resistance during traveling leads to a deterioration of fuel efficiency, in a truck with a normal roof which is not a high roof type, a drag foiler (air deflector) has been mounted on the cab to reduce the air resistance and to suppress the deterioration of fuel efficiency.

On the other hand, in the cab of a high roof type, since the height of a rear end of a roof is close to or substantially equal to the height of the mounted object, adding a drag foiler is difficult, which means that a reduction in the air resistance cannot be expected by the drag foiler. Therefore, it is necessary to reduce the air resistance by means other than the drag foiler.

Patent Document 1 applies a gap shielding member which seals space between a rear face of the cab and the mounted object from its upper side and a vehicle width direction, and thereby, lets the oncoming wind received from the vehicle front side pass to the vehicle rear side to reduce the air resistance. According to the gap shielding member as described in Patent Document 1, since air flow is changed in a narrow range in a vehicle length direction between the rear face of the cab and the mounted object, the air flow rapidly changes to a vehicle outside. Thus, it is considered difficult to let the oncoming wind smoothly pass to the vehicle rear side.

Because of this, in the cab of a high roof type, it is conceivable to reduce the air resistance by passing the oncoming wind received from the vehicle front side to the vehicle rear side in accordance with a shape of the roof panel itself. In this case, since the air flow is changed in a wide range in the vehicle length direction, it is considered that the oncoming wind can smoothly pass to the vehicle rear side.

However, there are various variations in the mounted objects of trucks. For example, even in a van truck, heights and widths of cargo boxes vary, and if the shape of the roof panel itself is modified in accordance with each of them to have baffler effects, variations of the roof panel increase, causing a risk of a cost rise.

The present invention has been devised in view of the above problems, and an object thereof is to provide a high roof cab for a truck, capable of contributing to an improvement in fuel efficiency by reducing air resistance during traveling while suppressing a cost rise in a cab of a high roof type.

### [Solution to Problem]

The present disclosure has been made to solve at least a part of the above problems, and can be realized as the following aspects or application examples.
(1) A high roof cab for a truck according to the present application example, in which a roof panel made of a metal plate is mounted to expand a vehicle interior to an upper side of a cab body having an opened ceiling and an vehicle interior of a cab is integrally formed by the cab body and a roof part including the roof panel, is characterized in that the roof part includes bafflers mounted on both sides of the roof panel, and each of the bafflers includes an inclined face which inclines so as to gradually widen a width of the roof part outward in a vehicle width direction from a vehicle front side toward a vehicle rear side.

According to such a high roof cab for a truck, since the bafflers are mounted on the both sides of the roof panel and the inclined faces of the bafflers incline so as to gradually widen the width outward in the vehicle width direction from the vehicle front side toward the vehicle rear side, the oncoming wind received from the vehicle front side during traveling flows to the vehicle rear side while being guided outward in the vehicle width direction by the inclined faces. Consequently, impact of the oncoming wind against the mounted object behind the high roof cab is reduced. This reduces the air resistance during traveling, and thereby, contributes to an improvement in fuel efficiency.

In addition, by preparing bafflers in shapes corresponding to the shape of the mounted object behind the high roof cab and attaching the bafflers to the both sides of the roof panel, it is possible to effectively reduce the air resistance during traveling while suppressing a cost rise.

(2) Preferably, an upper face of the roof panel inclines such that a vehicle height gradually increases in the cab from the vehicle front side toward the vehicle rear side.

Accordingly, the oncoming wind received by a front face of the high roof cab during traveling flows along the upper face of the roof panel to an upper rear side of the roof panel, which contributes to a reduction in the air resistance.

(3) Preferably, the upper face of the roof panel is configured by: a front upper face which positions on the vehicle front side and has an inclining angle that inclines toward the vehicle front side set within a first predetermined angle range; and a rear upper face which positions on the vehicle rear side and has the inclining angle set within a second predetermined angle range smaller than the first predetermined angle range.

Accordingly, the front upper face guides the oncoming wind received by a cab front face along the roof part and the rear upper face can smoothly feed the oncoming wind flowed along the roof part to the rear side of the cab, which contributes to a reduction in the air resistance.

(4) Preferably, the bafflers are respectively mounted on a left side and a right side of the rear upper face.

Accordingly, the bafflers are limitedly mounted on the left and right sides of the roof panel in the roof part, so that it is possible to reduce the impact of the oncoming wind against the mounted object behind the high roof cab while suppressing the size of the bafflers.

(5) Preferably, there is provided a dent integrally formed by one of the bafflers and either one of the left side and the right side of the roof panel, and the dent receives an intake duct.

Accordingly, the air resistance due to the intake duct during traveling can be reduced.

(6) Preferably, each of a left side face and a right side face of the roof panel curves or inclines so as to narrow a width of the roof panel as approaching upward; and the bafflers are each disposed at a portion at which the width of the roof panel is narrowed in a middle portion and an upper portion in an up-down direction on the vehicle rear side of the left side face and the right side face of the roof panel.

Accordingly, while forming the roof part in a shape capable of reducing the air resistance, it possible to reduce the impact of the oncoming wind against the mounted object behind the high roof cab to reduce the air resistance. In addition, since the bafflers are to be limitedly mounted on the middle and the upper portions in the up-down direction on the vehicle rear side, while suppressing the size of the bafflers, it is possible to reduce the impact of the oncoming wind against the mounted object behind the high roof cab.

(7) Preferably, material of the bafflers is resin.

Accordingly, by utilizing formability of the resin, outer shape of the bafflers can be set as the most effective shape for reducing the air resistance.

### [Effect of the Invention]

According to the present disclosure, the impact of the oncoming wind against the mounted object behind the high roof cab is reduced, so that it is possible to reduce the air resistance during traveling, which contributes to an improvement in the fuel efficiency. In addition, since the bafflers are mounted on the both sides of the roof panel, it is possible to effectively reduce the air resistance during traveling while suppressing a cost rise.

### [Brief Description of the Drawings]

FIG. 1 is a side view of a vehicle right side (intake duct arranged side) of an upper cab including a roof part of a high roof cab according to one embodiment.
FIG. 2 is a perspective view of the high roof cab according to the one embodiment when seen from an upper front side on the vehicle right side (intake duct arranged side).
FIG. 3 is a perspective view of the high roof cab according to the one embodiment when seen from the upper front side on a vehicle left side (intake duct arranged side).
FIG. 4 is a front view of the high roof cab according to the one embodiment.
FIG. 5 is a plan view of the high roof cab according to the one embodiment.
FIGS. 6(a),(b) is a main part perspective view of the vehicle right side (intake duct arranged side) of the roof part of the high roof cab according to the one embodiment when seen from an upper rear side, of which FIG. 6 (a) depicts a state where an intake duct and a side roof cover (baffler) are removed and FIG. 6 (b) depicts a state where the intake duct and the side roof cover (baffler) are mounted.
FIG. 7 is a main part perspective view of the vehicle left side of the roof part of the high roof cab according to the one embodiment when seen from the upper rear side.
FIGS. 8(a),(b) is a schematic plan view for explaining actions and effects of the high roof cab according to the one embodiment, of which FIG. 8 (a) relates to the present embodiment and FIG. 8(b) relates to a comparative example.

### [Description of Embodiments]

An embodiment of the present disclosure will now be described with reference to drawings. The embodiment is merely illustrative and is not intended to preclude the application of various modifications and techniques not explicitly set forth in the following embodiment. Each configuration of the present embodiment can be implemented by various modifications without departing from the gist thereof. Also, it can be selected as necessary, or can be combined as appropriate.

### --1. Apparatus Configuration--

The present embodiment describes a large-sized truck as an example of a vehicle. Such a truck is also simply referred to as a "vehicle".

In the following description, a forward direction of the vehicle is referred to as a front side, the opposite direction thereof (a rearward direction of the vehicle) is referred to as a rear side, and left and right are defined with reference to a state in which the vehicle faces the front side. Further, a front-rear direction is also referred to as a vehicle length direction, and a left-right direction is also referred to as a vehicle width direction. Furthermore, the direction perpendicular to both the vehicle length direction and the vehicle width direction is referred to as an up-down direction. The vehicle is assumed to be on a horizontal road and in a posture that the up-down direction coincides with the vertical direction (the downward direction coincides with the acting direction of gravity). In this posture, the vertically upward direction is referred to as a height direction.

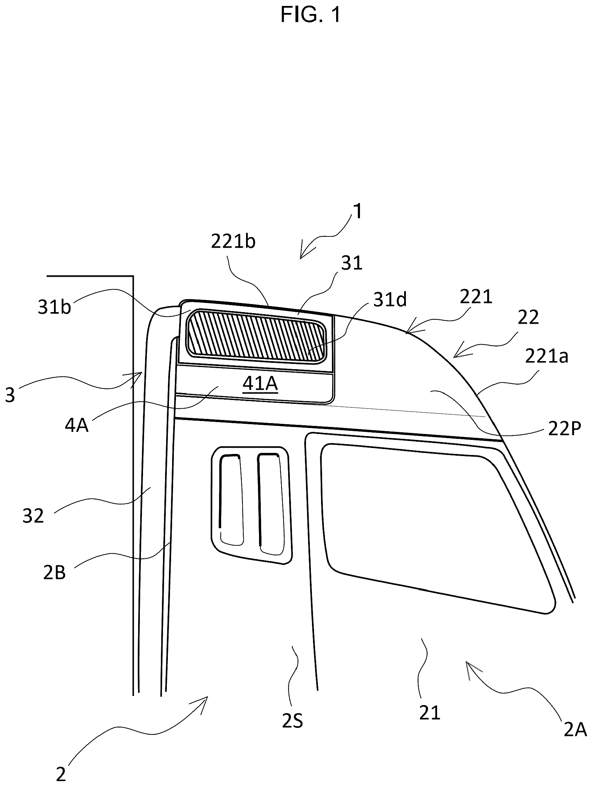

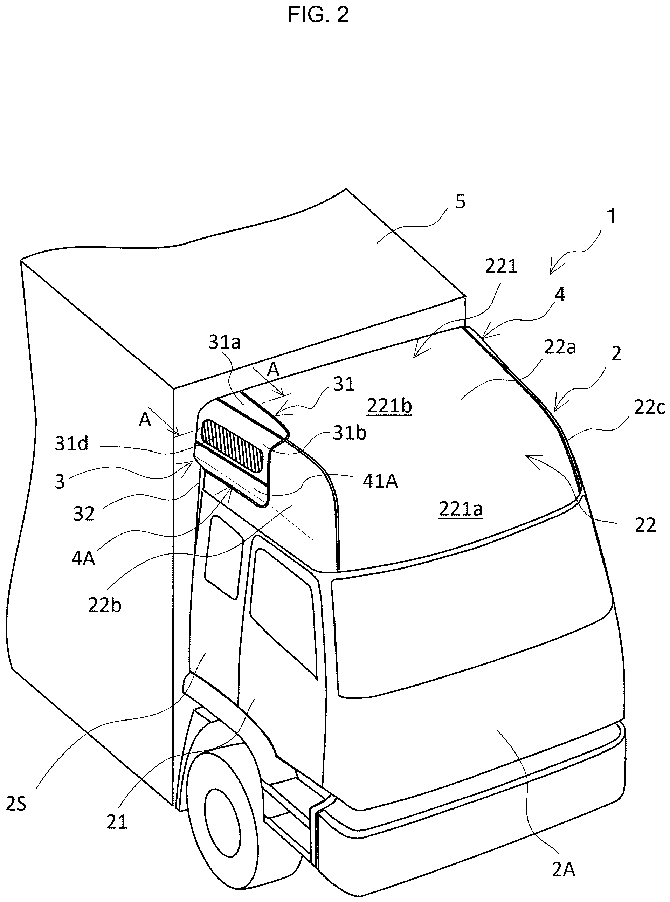

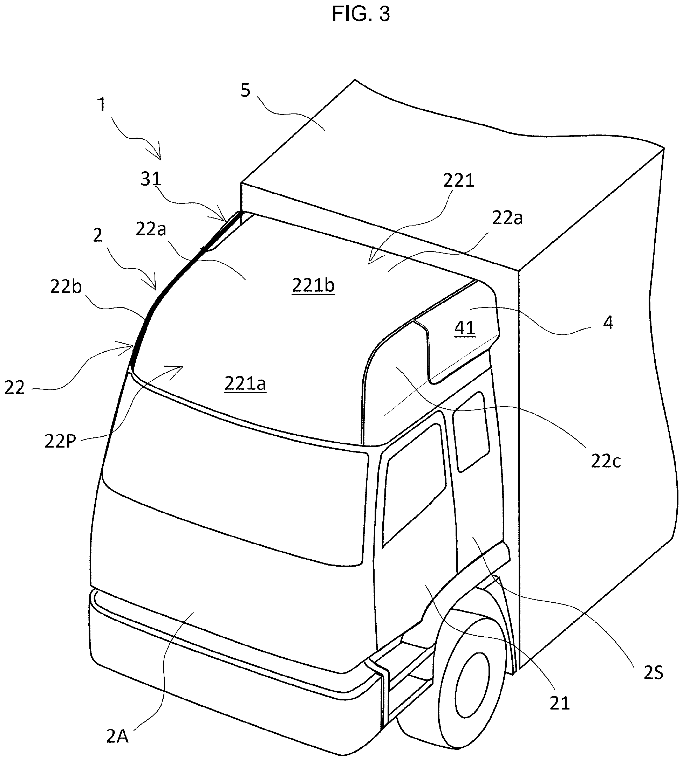

As depicted in FIGS. 1 to 3, a vehicle 1 is a large-sized truck of a so-called cab-over type, which includes a cab 2 provided at a front portion of the vehicle 1 and a non-illustrated engine mounted below the cab 2. The vehicle 1 of the present embodiment is a right-handed vehicle and is provided with a non-illustrated driver's seat on the right side within the cab 2. Left and right side faces (hereinafter, also referred to as cab side faces) 2S of the cab 2 are each provided with a door 21 for getting on and off.

In a so-called high roof vehicle, a roof part 22 at an upper face of the cab 2 is higher than a general roof (hereinafter, also referred to as "normal roof"), but as compared to this, the vehicle 1 according to the present embodiment is formed as a high roof vehicle with even higher roof part 22 (hereinafter, such a vehicle is also referred to as a super high roof vehicle). The super high roof vehicle can secure a high vehicle interior space inside the cab 2, which elevates habitability of the vehicle interior space, so that when a driver or the like rests temporarily in the vehicle interior during long distance travel in a large-sized truck, etc., the comfortableness can be enhanced. The cab 2 is also referred to as a high roof cab.

The roof part 22 includes a roof panel 22P made of a metal plate. The roof panel 22P is mounted on an upper side of the cab body 2A having an opened ceiling. The cab body 2A and the roof panel 22P integrally form the vehicle interior of the cab (high roof cab) 2 to expand the vehicle interior to the upper side.

The roof panel 22P includes: a central panel 22a constituting a roof front portion and a roof top; a side panel 22b constituting a roof right portion; and a side panel 22c constituting a roof left portion, and the side panels 22b and 22c are welded to a right edge and a left edge of the central panel 22a, respectively to be formed integrally. Non-illustrated frames are provided inside the roof part 22 to support the roof part 22.

In a truck with a normal roof, since a cargo box is higher than the roof part, the portion higher than the roof part at a front face of the cargo box is subjected to the oncoming wind to cause increased air resistance. In view of this, a drag foiler (air deflector) has been attached to the upper portion of the cab to reduce the air resistance and consequently to suppress deterioration of fuel efficiency. On the other hand, in a super high roof vehicle, the roof part is as high as a mounted object (a van, etc.) such as a cargo box in the cab, so that the drag foiler cannot be mounted, but the air resistance can be reduced by utilizing the roof part 22.

In view of this, the present vehicle 1 reduces the air resistance in accordance with shape setting of the roof part 22. That is, an upper face 221 (the upward directing face composed of the central panel 22a and edges near the central panel 22a of the side panels 22b and 22c) of the roof panel 22 smoothly inclines such that a vehicle height gradually increases in the cab 2 from the vehicle front side toward the vehicle rear side.

The upper face 221 can be divided into: a front upper face 221a which positions on the vehicle front side and has an inclining angle that inclines toward the vehicle front side set within a first predetermined angle range; and a rear upper face 221b which positions on the vehicle rear side and has the inclining angle set within a second predetermined angle range smaller than the first predetermined angle range.

The front upper face 221a and the rear upper face 221b are not particularly partitioned, and are smoothly continuous. Each of the inclining angles of the front upper face 221a and the rear upper face 221b gradually decreases. However, the front upper face 221a smoothly continues from a front face of the cab 2, which includes a windshield 2G and is formed at a large inclining angle close to the vertical, and the degree of decrease in the inclining angle thereof is larger than that of the rear upper face 221b. Therefore, the front upper face 221a has a relatively large curvature when viewed from the side, whereas the rear upper face 221b has a small curvature close to the flat when viewed from the side (see FIG. 1).

Accordingly, the oncoming wind received by the front face of the high roof cab 2 during traveling flows along the upper face 221 of the roof panel 22P to the upper rear side of the roof panel 22P, which contributes to a reduction in the air resistance. In particular, the front upper face 221a guides the oncoming wind received by the front face of the cab 2 along the roof part 22, and the rear upper face 221b smoothly feeds the oncoming wind flowed along the roof part 22 to the rear side of the cab 2.

In the present vehicle 1, as a characteristic air resistance reducing means, the roof part 22 includes roof side covers 4 and 4A serving as bafflers mounted on both sides (side panels 22b and 22c, and both side edges of the central panel 22a) of the roof panel 22P. These roof side covers 4 and 4A respectively include inclined faces 41 and 41A that each face outward in the vehicle width direction. These inclined faces 41 and 41A each incline so as to gradually widen a width of the roof part 22 outward in the vehicle width direction from the vehicle front side toward the vehicle rear side. The roof side covers 4 and 4A are plate-shaped members in which the inclined faces 41 and 41A are formed in curved shapes mainly curving in the vehicle height direction, and are also referred to as curved plates.

In the present embodiment, the roof side cover 4 of a full-size is provided on the left side of the vehicle 1, but on the right side of the vehicle 1, since an intake duct 3 is provided, the roof side cover 4A of a half-size with only the lower half is provided. However, in a vehicle without the intake duct 3, the roof side covers 4 of a full-size may be provided on both left and right sides of the vehicle 1.

With respect to the vehicle length direction, the roof side covers 4 and 4A are provided on the rear upper face 221b of the roof part 22. With respect to the up-down direction (vehicle height direction), the roof side covers 4 and 4A are provided at middle and upper portions in the up-down direction in a left side face and a right side face (side panels 22b and 22c) of the roof panel 22P in the roof part 22. The reason why the roof side cover 4 is limitedly provided as such at the middle portion and the upper portion in the up-down direction in the rear upper face 221b is to efficiently reduce the air resistance with small roof side covers 4 and 4A.

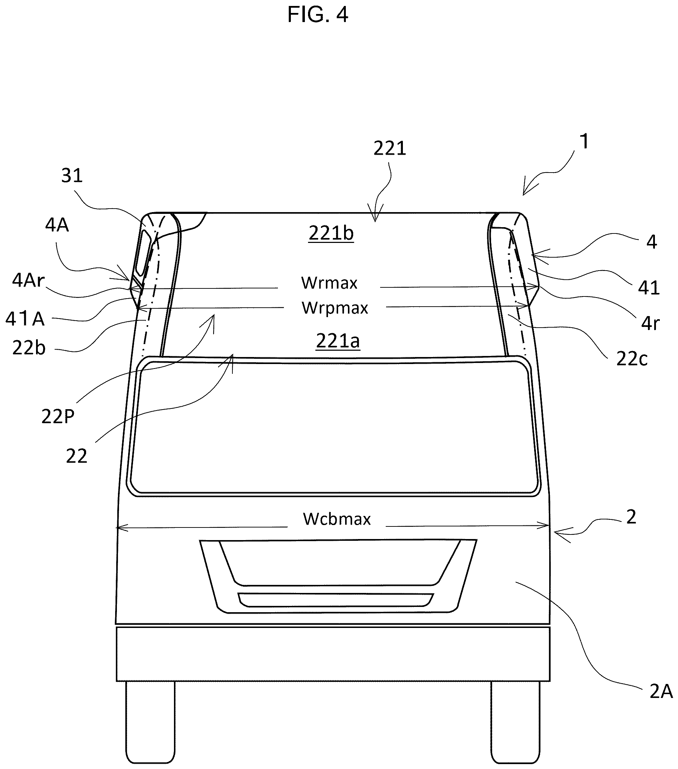

In the present embodiment, as depicted in FIG. 4, the cab side faces 2S are bent such that upper portions thereof position slightly near to the vehicle center. The cab body 2A is close to the flat with extremely slight curves, whereas the roof panel 22P of the roof part 22 is bent with a curvature somewhat larger than that of the cab body 2A. Therefore, the maximum width Wrpmax of the roof panel 22P, which is defined by the left and right side faces (side panels 22b and 22c) of the roof panel 22P, is smaller than the maximum width Wcbmax of the cab body 2A. Incidentally, one-dot chain lines in FIG. 4 are supplementarily drawn to illustrate curved shapes.

As such, the width of the roof panel 22P is somewhat narrower than that of the cab body 2A. Because of this, on the rear side of the roof part 22 (in particular, the middle and upper portions in the up-down direction of the roof part 22 of which width is narrowed), the front face of the cargo box 5 serving as the mounted object does not become shade of the cab 2, so that the air resistance easily becomes large due to the cargo box 5 during traveling. From this viewpoint, the roof side cover 4 is provided at the middle and the upper portions in the up-down direction.

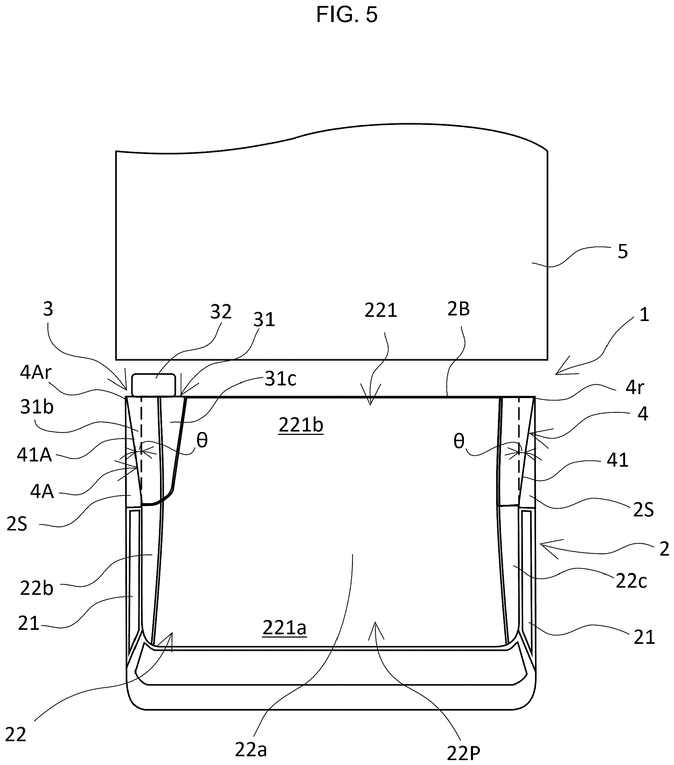

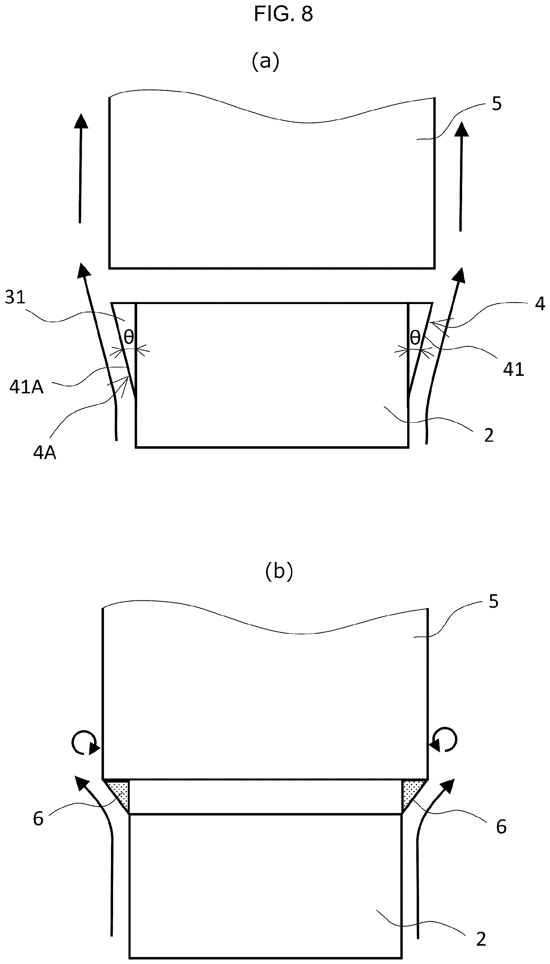

As depicted in FIGS. 4 and 5, the inclined faces 41 and 41A of the roof side covers 4 and 4A each incline so as to gradually widen the width outward in the vehicle direction from the vehicle front side toward the vehicle rear side. This is for guiding the oncoming wind, as indicated by arrows in FIG. 8(a), along the inclined faces 41 and 41A to the rear side to suppress the impact of the oncoming wind against the front face of the cargo box 5. However, if the inclining angle θ of the inclined face 41 with respect to the vehicle rear side is too large, the inclined faces 41 and 41A themselves rather become the air resistance. Therefore, the inclining angles θ of the inclined faces 41 and 41A are set not to be excessively large. Because the length (length in the vehicle length direction) of the cab 2 is secured to some extent, even when the inclining angles θ of the inclined faces 41 and 41A are suppressed within limits, front ends of the inclined faces 41 and 41A can locate on the rear side of middle portion in the front-rear direction of the roof part 22 of the cab 2, and therefore, the roof side covers 4 and 4A are provided on the rear upper face 221b.

In the present embodiment, rear ends 4r and 4Ar of the inclined faces 41 and 41A of the roof side covers 4 and 4A protrude the most outward in the vehicle width direction in the roof part 22. The rear ends 4r and 4Ar, which are the protruding portions, are disposed close to portions (maximum width portions) that locate the most outward in the vehicle width direction in the cab body 2A. The inclined face 4 may protrude such that the rear ends 4r and 4Ar locate at positions in the vehicle width direction substantially the same as the positions of the maximum width portions of the cab body 2A. In other words, the inclined face 41 may protrude outward in the vehicle width direction such that the maximum width Wrmax of the roof part 22, which is defined by the rear ends 4r and 4Ar of the inclined faces 41 and 41A, becomes equal or substantially equal to the maximum width Wcbmax of the cab body 2A.

As depicted in FIG. 4 (front view of the vehicle 1), the side panels 22b and 22c of the roof panel 22P are slightly narrower than side faces of the cab body 2A, and are formed to be narrower as approaching upward. With respect to this, the roof side cover 4 is disposed at portions at which the width is narrowed in the side panels 22b and 22c, which are the middle and the upper portions in the up-down direction on the vehicle rear side (the rear upper face 221b).

The inclined faces 41 and 41A of the roof side covers 4 and 4A are formed so as to continue to the roof panel 22P with smoothly curved faces. That is, the inclined faces 41 and 41A of the roof side covers 4 and 4A each curve so as to gradually widen as approaching upward at lower portions thereof that are continuous with the side panels 22b and 22c. Regarding the inclined face 41 of the roof side cover 4, the upper portion thereof keeps the substantially same width or is slightly narrowed as approaching upward, and a further upper portion thereof curves to almost horizontally toward the center of the vehicle 1 to be smoothly continuous with the upper face 221 of the roof panel 22P.

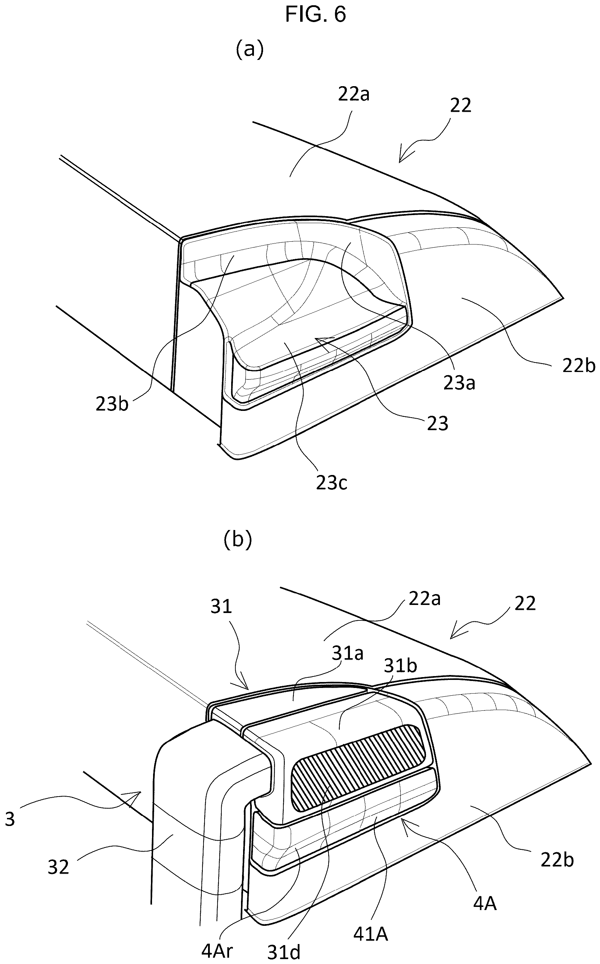

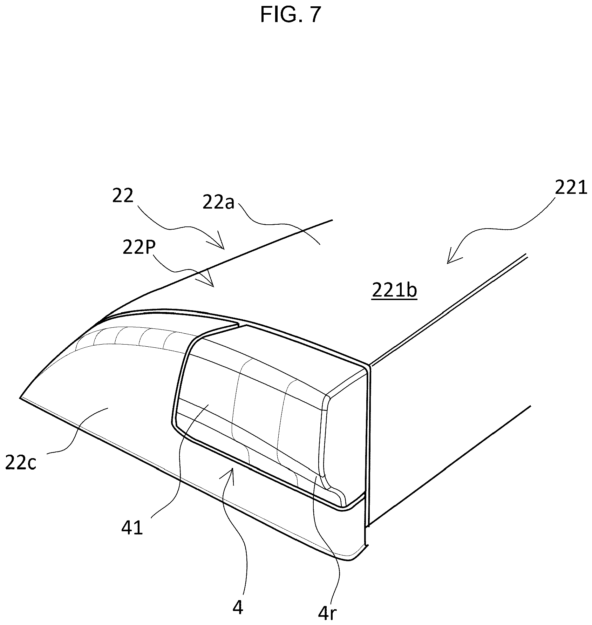

As depicted in FIGS. 6(a) and 7, since the incline surfaces 41 and 41A protrude outward in the width direction as approaching to the vehicle rear side, in the lower portions of the inclined faces 41 and 41A, which are continuous with the side panels 22b and 22c, curving modes of the portions that gradually widen as approaching upward are set to have large curvatures of curves so as to sharply widen as approaching to the vehicle rear side.

As such, the inclined faces 41 and 41A smoothly curve three-dimensionally in the vehicle height direction and the vehicle width direction, which makes it uneasy to form the inclined faces 41 and 41A by pressing a panel of steel material. Because of this, the present embodiment uses, as material of the roof side cover 4, resin material capable of forming three-dimensional curved faces relatively easily.

Incidentally, the vehicle 1 includes the intake duct 3 that feeds air to the engine (internal combustion engine) serving as a power source. As depicted in FIGS. 1, 5, and 6(b), the intake duct 3 includes an air intake unit (hereinafter, also referred to as snorkel) 31 installed in the roof part 22 of the cab 2 and a duct unit 32 disposed along the rear face 2B of the cab 2.

A depicted in FIG. 6(b), the snorkel 31 includes: a head (hereinafter, also referred to as snorkel body) 31a in a hollow shape, which communicates with the duct unit 32 and has an opening 31c that faces the side of the vehicle 1; and a snorkel cover (cover) 31b which is attached so as to cover the snorkel body 31a and forms part of the outer face of the roof part 22. The snorkel cover 31b is equipped with a louver 31d disposed at an opening portion at a position corresponding to an opening (not depicted) of the snorkel body 31a, and takes in air of the outside (outside air) through the louver 31d and the opening into the inside of the snorkel body 31a.

The duct unit 32 is a portion that serves as an air passage between the snorkel 31 and the engine, and is formed in a cylindrical shape that extends downward from a rear end of the snorkel 31. The inside of the snorkel 31 and the inside of the duct unit 32 are communicating with each other, and the air taken in by the snorkel 31 is supplied to an intake portion of the engine through the duct unit 32.

In a vehicle with a normal roof, the snorkel 31 is disposed on the top of the roof, but the present vehicle 1, which is a super high roof vehicle, is provided with a recess 23 (see FIG. 6(a)) dented at a portion of the roof part 22 of the cab 2, and the snorkel 31 is disposed in the recess 23. Since the snorkel 31 is disposed on a right rear portion of the cab 2, in response to this, the recess 23 is formed at a right (driver's side) rear portion of the roof part 22.

FIGS. 6(a) and (b) are main part perspective views of the roof part 22 of the vehicle 1 when seen from the upper rear side on the intake duct arranged side (vehicle right side), in which thick lines illustrate contour lines and edge-shaped bent portions bending at some steep angles, and thin lines illustrate explanatory lines for explaining curved shapes. As depicted in FIG. 6(a) illustrating a state in which the intake duct is removed, the recess 23 is formed at a rear portion of the side panel 22b on the right side of the roof part 22 so as to be dented downward from a roof surface of the roof part 22.

The recess 23 includes: a side face 23a on the vehicle front side; a side face 23b on a vehicle center side; and a bottom face 23c, and is formed such that smooth curved faces respectively connect the side face 23a to the side face 23b, the side face 23a to the bottom face 23c, and the side face 23b to the bottom face 23c. The bottom face 23c is formed to be inclined downward to the right, which means descending toward the outside in the vehicle width direction, and also downward to the front side (downward to the right in FIG. 6(a)), which means descending toward the front side in the vehicle front-rear direction, so as to cause rainwater dropped onto the roof part 22 to fall toward the cab side face 2S, in particular, the vicinity of a rear portion of the door 21.

In the present embodiment, as depicted in FIG. 6(a), the bottom face 23c has: a portion on the vehicle center side formed in a curved shape slightly protruding upward; and a portion on the cab side face 2S side formed in a curved shape slightly protruding downward, and is in a curved shape formed by these curved faces smoothly connected to each other. However, the shape of the bottom face 23c is an example, and the bottom face 23c only needs to incline downward to the cab side face 2S side.

The snorkel 31 of the intake duct 3 is, as depicted in FIG. 6(b), received in the recess 23 and fixed to the bottom face 23c via a non-illustrated fastener. In the present embodiment, the outer face of the snorkel 31 is formed in a curved shape that smoothly continues with the curved face of the roof part 22.

In the present embodiment, the outer face of the snorkel cover 31b of the snorkel 31 is formed in a shape substantial plane-symmetry with and similar or substantially similar to the shape of an upper half of the inclined face 41 of the roof side cover 4 equipped on the left side of the roof part 22 of the vehicle 2. In addition, the inclined face 41A of the roof side cover 4A and the outer face of the snorkel cover 31b configure a face shape that corresponds to the roof side cover 4 of the full-size, which exhibits actions and effects similar to or close to those of the roof side cover 4.

When focusing on the outer face of the cab 2, the snorkel 31 of the intake duct 3 is consequently accommodated in a dent surrounded by the recess 23 and an upper edge of the roof side cover 4A.

### --2. Actions and Effects--

Since the high roof cab for the truck according to the present disclosure is configured as described above, the following actions and effects can be obtained.

On the both sides of the roof panel 22P, as the bafflers, the roof side cover 4, as well as the roof side cover 4A and the snorkel cover 31b are attached. In addition, the inclined face 41 of the roof side cover 4, as well as the inclined face 41A of the roof side cover 4A and the outer face of the snorkel cover 31b incline so as to gradually widen outward in the vehicle width direction from the vehicle front side toward the vehicle rear side. Accordingly, the oncoming wind received from the vehicle front side during traveling flows to the vehicle rear side while being guided by the inclined faces 41 and 41A or the likes outward in the vehicle width direction. This reduces the impact of the oncoming wind against the cargo box 5 serving as the mounted object behind the cab 2, which reduces the air resistance during traveling, and consequently can contribute to the improvement in fuel efficiency.

To describe with reference to FIG. 8(a),(b), in the high roof cab according to the present embodiment, as depicted by the arrows in FIG. 8(a), since the inclining angle θ with respect to the front-rear direction of the inclined face 41 is suppressed to be small, the oncoming wind flowing to the rear side of the inclined face 41 after flowing along the inclined face 41 further flows along the outer face of the cargo box 5, so that occurrence of turbulence is suppressed, and consequently, the air resistance can be reduced during traveling.

On the other hand, as in the invention of cited document 1, in a case of attaching a gap shielding member 6 which seals space between the rear face of the cab 2 and the cargo box 5 from the upper side and the vehicle width direction, as depicted by arrows in FIG. 8(b), the air flow is changed to the vehicle outside in a narrow range in the vehicle length direction between the rear face of the cab 2 and the mounted object 5. Thus, the air flow rapidly changes to the vehicle outside, which makes it difficult to let the oncoming wind smoothly flow to the vehicle rear side. Therefore, due to the oncoming wind that flows so as to be apart from the outer face of the cargo box 5, turbulence easily occurs due to vortex or the like generated in the vicinity of the outer face of the cargo box 5, increasing the air resistance during traveling.

As the roof side covers 4 and 4A, by preparing members in shapes corresponding to the shape of the mounted object such as the cargo box 5 behind the cab 2, and amounting them on the both sides of the roof panel 22P, it is possible to effectively reduce the air resistance during traveling in accordance with the shape of the mounted object, and to improve the fuel efficiency while suppressing the cost rise.

The present vehicle 1 is a super high roof vehicle in which the height of the roof part 22 is further and further higher than the normal high roof in a truck. Further, the roof part 22 of the cab 2 is as high as the mounted object such as the cargo box 5. Furthermore, the upper face 221 of the roof panel 22P inclines such that the vehicle height gradually increases from the vehicle front side of the cab 2 toward the vehicle rear side. Therefore, the oncoming wind received by the front face of the high roof cab 2 during traveling flows along the upper face 221 of the roof panel 22P toward the upper rear side of the roof panel 22P, and then flows along the upper face of the mounted object, so that the air resistance can be reduced.

In particular, of the upper face 221, the front upper face 221a guides the oncoming wind received by the front face of the cab 2 along the roof part 22, and the rear upper face 221b smoothly feeds the oncoming wind flowed along the roof part 22 to the rear side of the cab 2. This contributes to a reduction in the air resistance.

Since the roof side covers 4 and 4A are mounted limitedly to the left and right sides of the rear upper face, and further limitedly to the middle and upper portions in the up-down direction on the vehicle rear side, it is possible to reduce, while suppressing the size of the bafflers, the impact of the oncoming wind against the mounted object such as the cargo box 5 behind the high roof cab.

Since one of the left and right sides (left and right sides in the present embodiment) of the roof panel 22 and the roof side cover 4A collectively form the dent, and the snorkel 31 of the intake duct 3 is received by the dent, the air resistance due to the snorkel 31 of the intake duct 3 during traveling can be reduced.

In the present embodiment, since the outer face of the snorkel cover 31b is formed in the shape similar or substantially similar to the shape of the upper half of the inclined face 41 of the roof side cover 4, it is possible to obtain the effect of reducing the air resistance during traveling due to baffler actions by the outer face of the snorkel cover 31b as well.

In the present embodiment, the maximum width Wrpmax of the roof panel, which is defined by the left and right side faces of the roof panel 22P (the side panels 22b and 22c), is set to be smaller than the maximum width Wcbmax of the cab body 2A. In addition, the maximum width Wrmax of the roof part 22, which is defined by the rear ends of the inclined faces 41 and 41A of the roof side covers 4 and 4A, is close, equal or substantially equal to the maximum width Wcbmax of the cab body 2A. Accordingly, while forming the cab side faces 2S in curved shapes so as be narrowed in the width direction as approaching upward, it is possible to reduce the impact of the oncoming wind against the mounted object behind the cab 2 by the inclined faces 41 and 41A of the roof side covers 4 and 4A.

The left and right side faces of the roof panel 22p (side panels 22b and 22c) each curve or incline so as to narrow the width of the roof panel 22P as approaching upward, and the roof side covers 4 and 4A are arranged at the middle and upper portions (portions at which the width of the roof panel 22p is narrowed) in the up-down direction on the vehicle rear side of the left and right side faces of the roof panel 22P. This makes it possible, while forming the roof part in a shape capable of reducing the air resistance, to reduce the air resistance by reducing the impact of the oncoming wind against the mounted object 5 behind the cab 2.

The inclined face 41 of the roof side cover 4 curves three-dimensionally in the vehicle height direction and the vehicle width direction, and although this face shape contributes to a reduction in the air resistance during traveling, on the other hand, forming the inclined face 41 is not easy. In this respect, the present embodiment uses resin material as the material of the roof side cover 4. Accordingly, by utilizing the formability of resin, which makes it relatively easy to form the three-dimensional curved face, it is possible to set the outer face of the inclined face 41 to be the most effective one for reducing the air resistance.

### --3. Miscellaneous--

As described above, the present embodiment illustrates a large-sized truck of a super high roof vehicle in which the roof part 22 of the cab 2 is as high as the mounted object such as the cargo box 5. However, even in a high roof vehicle in which the roof part 22 is not as high as the super high roof vehicle, it is difficult to mount a drag foiler (air deflector) on the cab, so that utilizing the invention of the present disclosure can contribute to a reduction in the air resistance.

It is also not limited to a large-sized truck.

In the present embodiment, at the both sides of the roof panel 22P, the roof side covers 4 and 4A are limitedly attached to the middle and upper portions in the up-down direction on the vehicle rear side of the left and right sides of the rear upper face of the roof panel 22P. However, the roof side cover 4 may be provided at any position of the left and right sides of the rear upper face of the roof panel 22P, and is not limited to that of the present embodiment.

In the present embodiment, each of the inclined faces 41 and 41A of the roof side covers 4 and 4A is in a shape that smoothly and three-dimensionally curves in the vehicle height direction and the vehicle width direction, but each of the inclined faces 41 and 41A may be in any shape that inclines so as to gradually widen the width of the roof part 22 outward in the vehicle width direction from the vehicle front side toward the vehicle rear side, and is not limited to the above shape.

In terms of formability, the material of the roof side covers 4 and 4A is preferable resin, but the material of the roof side covers 4 and 4A is not limited thereto.

The above embodiment assumes that the intake duct 3 feeds air to the engine (internal combustion engine) which serves as a power source, but the intake duct is not limited thereto. The intake duct may supply cooling air, for example, to an electric motor serving as a power source of an electric vehicle, a battery unit (a device relating to a power source) of an electric vehicle, or the like.

In the above embodiment, although the intake duct 3 is disposed on the right side of the roof part 22 of the vehicle 1, the intake duct 3 may be disposed on the left side, that is, the opposite side with respect to the left and right sides. In this case, the roof side covers 44 and 4A as the bafflers are to be arranged on the opposite sides with respect to the left and right sides.

If the intake duct 3 is omitted, the roof side cover 44 of a full-size can be disposed on both left and right sides.

### [Description of Reference Symbols]

- 1: vehicle
- 2: cab
- 2B: rear face of cab 2
- 2S: side face (cab side face) of cab 2
- 21: door
- 22: roof part
- 221: upper face of roof part 22
- 221a: front upper face
- 221b: rear upper face
- 22P: roof panel
- 22a: central panel of roof panel 22P
- 22b,22c: side panel of roof panel 22P
- 23: recess
- 23a,23b: side face of recess 23
- 23c: bottom face of recess 23
- 24: water guide
- 25a-25e: linear protrusion
- 26a-26e: groove
- 3: intake duct
- 31: air intake unit (snorkel)
- 31a: head (snorkel body)
- 31b: snorkel cover (cover)
- 31c: opening
- 31d: louver
- 32: duct unit
- 4,4A: roof side cover as baffler (curved plate)
- 41,41A: inclined face
- 4r,4Ar: rear end of inclined face 41,41A
- 5: cargo box (mounted object)
- Wcbmax: maximum width of cab body 2A
- Wrmax: maximum width of roof part 22
- Wrpmax: maximum width of roof panel 22P

## Claims

1. A high roof cab for a truck in which a roof panel made of a metal plate is mounted to expand a vehicle interior to an upper side of a cab body having an opened ceiling and an vehicle interior of a cab is integrally formed by the cab body and a roof part including the roof panel, the high roof cab being **characterized in that**
the roof part includes bafflers mounted on both sides of the roof panel, and each of the bafflers includes an inclined face which inclines so as to gradually widen a width of the roof part outward in a vehicle width direction from a vehicle front side toward a vehicle rear side.

2. The high roof cab according to claim 1, wherein
an upper face of the roof panel inclines such that a vehicle height gradually increases in the cab from the vehicle front side toward the vehicle rear side.

3. The high roof cab according to claim 1 or 2, wherein
the upper face of the roof panel is configured by: a front upper face which positions on the vehicle front side and has an inclining angle that inclines toward the vehicle front side set within a first predetermined angle range; and a rear upper face which positions on the vehicle rear side and has the inclining angle set within a second predetermined angle range smaller than the first predetermined angle range.

4. The high roof cab according to claim 3, wherein
the bafflers are respectively mounted on a left side and a right side of the rear upper face.

5. The high roof cab according to claim 4, comprising
a dent integrally formed by one of the bafflers and either one of the left side and the right side of the roof panel, the dent receiving an intake duct.

6. The high roof cab according to any one of claims 1 to 5, wherein:
each of a left side face and a right side face of the roof panel curves or inclines so as to narrow a width of the roof panel as approaching upward; and
the bafflers are each disposed at a portion at which the width of the roof panel is narrowed in a middle portion and an upper portion in an up-down direction on the vehicle rear side of the left side face and the right side face of the roof panel.

7. The high roof cab according to any one of claims 1 to 6, wherein material of the bafflers is resin.
